# EUROPEAN PATENT SPECIFICATION

(11) **EP 0 800 313 B1**
(45) Date of publication and mention of the grant of the patent: **12.11.2003**
(21) Application number: 97302351.8
(22) Date of filing: 04.04.1997
(51) Int. Cl.: H04N 7/088, H04N 5/50

(54) **Automatic channel preset apparatus for television broadcasting signals**
Vorrichtung zur automatischen Voreinstellung der Kanäle für Fernsehsignale
Appareil pour le préréglage automatique des canaux pour des signaux d'émissions de télévision

(30) Priority: 05.04.1996 JP 8394996
(43) Date of publication of application: 08.10.1997
(73) Proprietor: KABUSHIKI KAISHA TOSHIBA, Kawasaki-shi, Kanagawa-ken 210-8572 (JP)
(72) Inventor: Hamadate, Shunichi, Fukaya-shi, Saitama-ken (JP)
(74) Representative: Waldren, Robin Michael

(56) References cited:
- EP-A- 0 486 988
- EP-A- 0 624 980
- EP-A- 0 666 691
- WO-A-95/24098
- "SENDER AUTOMATISCH ERFASST" FUNKSCHAU, vol. 63, no. 19, 6 September 1991, pages 58-60, XP000261114
- LERCH D: "SENDERPROGRAMMIERUNG MIT ATS-PLUS" RADIO FERNSEHEN ELEKTRONIK, vol. 40, no. 11, 1 January 1991, pages 677-679, XP000267675

## Description

### Field of the Invention:

The present invention relates to an automatic channel preset apparatus for the television broadcasting signal, and more particularly, to an automatic channel preset apparatus for the television broadcasting signal with which the receiving side can easily select and set up a channel in the most favorable reception conditions out of a plurality of receiving channels (CH) for a single program in a case as in the United Kingdom where five broadcasting stations (BBC1, BBC2, ITV, CH4, CH5) exist and each station transmits a single program (e.g. BBC1) using a plurality of channels with varied frequencies.

### Description of the Related Art:

As the system to receive television broadcasting, the operation to set up (store) a broadcasting channel to each channel position to receive, by using a receiving apparatus which uses the frequency synthesizer (FS) method, for example, is called channel preset (or simply preset).

In general, channel selection in a receiving apparatus is done by selecting a channel position to each of which a broadcasting channel (CH) have been preset.

There are various methods for channel presetting. In the automatic searching method, while local oscillation frequency at the tuner part is varied in succession, broadcasting channels are received sequentially, starting with lower frequencies, for example. The received broadcasting channels are automatically preset to the channel position in order of being received.

EP-Al-0,486,988 describes a device for automatically selecting and memorising broadcast channels. The device is adapted to recognise and store the signals in an established order which may be set by the user. The device may also select the signals having the greatest signal strength for a given broadcast.

In the United Kingdom, there are five television broadcasting stations (BBC1/BBC2/ITV/CH4/CH5) and the programs of these stations are transmitted through about 1000 broadcasting channels in a frequency band from CH21 to CH69.

In such circumstances, the Toshiba-made video tape recorders for the United Kingdom (hereinafter referred to as VTR) have applied the following methods to preset broadcasting channels automatically to the channel positions of VTR:
(1) At the moment the power plug is inserted into a plug socket, channel presetting starts automatically.
(2) Received signals by the antenna are given the automatic search and automatically set up to the channel positions sequentially (POS1, POS2, POS3, etc.). The setting up is done according to the customary rules in the United Kingdom, in such a manner shown in Table 1 below.

**TABLE 1**

| Position | Broadcasting Station |
|---|---|
| POS1 | BBC1 |
| POS2 | BBC2 |
| POS3 | ITV |
| POS4 | CH4 |
| POS5 | CH5 |

This setting up, upon the automatic search, is executed by decoding station codes which are contained in the broadcasting signals of detected signaling channels. However, when, upon channel scanning by AUTO SEARCH, the BBC1 signal, for example, is detected in a plurality of channels, the channel detected first is set up automatically.

Thus, conventional apparatus automatically sets up the first detected channel when the signal for a single broadcasting program (e. g., BBC1) is detected in a plurality of channels. That is, users were not able to select the channel of BBC1 which is the best of a plurality of BBC 1 channels in the conditions of field intensity, ghost, or the like.

### Summary of the Invention:

An object of the present invention is to provide an automatic channel preset apparatus for the television broadcasting signal, which is, upon receiving a single broadcasting program in a plurality of channels, able to preset the channel in the best reception conditions.

Therefore, according to the present invention, there is provided an automatic channel preset apparatus for broadcast television signals, comprising:
a tuner circuit for receiving broadcast television signals;
demodulation means for demodulating the signals received by said tuner circuit into video signals;
a text circuit for extracting station codes out of the video signals demodulated by said demodulation means and reading information on broadcasting stations and channels;
display means for displaying the video signals from said demodulation means and/or information on broadcasting stations and channels from said text circuit;
operating means responsive to user input for selecting an AUTO SET mode; and
control means, wherein when the AUTO SET mode is selected by said operating means, the control means:
   controls the tuner circuit to receive broadcast signals on a plurality of channels; and
   identifies the station of each signal using said extracted station codes,
characterised in that in said AUTO SET mode
the control means also classifies the signals into a signal group for each station; and
stores the station and channel information for each signal in a memory, wherein the control means also carries out a preset operation for each station comprising:
   controlling the display means to display to the user a signal from the signal group of the station;
   changing the signal displayed by the display means to another signal from the same signal group, in response to a channel selection operation of the user on the operating means and
   setting up a channel as a preset for the station in response to a user input on said operating means.

The automatic channel preset apparatus according to the present invention has a text circuit for reading information on broadcasting stations of the receiving channels through station codes superimposed in the television broadcasting signals, and information on channels. This apparatus is designed so that, by designating the AUTO SET mode, AUTO SEARCH is executed first, and then, whenever signaling channels are detected, the received channels are classified by program of the same content, which is read based on the station codes, into groups each of which is for a single program (e. g., groups of BBC1, BBC2, ITV, CH4, and CH5) and stored into the memory, thus, the operating means can select them at the next preset time, and upon preset, a channel at a time from each program channel group is displayed on the screen, and preset can be executed by selecting a channel in good reception conditions while watching images of them on the screen.

### Brief Description of the Drawings:

Fig. 1 is a block diagram of an automatic channel preset apparatus for the television broadcasting signals according to an embodiment of the present invention;
Fig. 2 is a block diagram to show an example of the circuit for the text circuit in Fig. 1;
Fig. 3 is an example of the key arrangement for the remote controller in Fig. 1;
Fig. 4 is a menu screen displayed on the screen every time the menu key on the remote controller is operated;
Figs. 5 (a) - (f) show each step of the AUTO SEARCH operation displayed on the screen one after another when AUTO SET is selected on the SET UP screen in Fig. 4;
Fig. 6 (g) shows the preset screen displayed on the screen together with the image upon termination of the AUTO SEARCH operation in Fig. 5 (f);
Fig. 6 (h) shows a screen explaining the selection of each channel image displayed on the preset screen;
Fig. 6 (i) shows a next preset screen displayed after a channel in the best reception conditions is preset on the preset screen;
Fig. 7 (j) shows a preset screen displayed on the screen after a predetermined number of positions is set up;
Fig. 7 (k) shows a screen that channels which are not displayed in Fig. 7 (j) are scrolled and displayed.

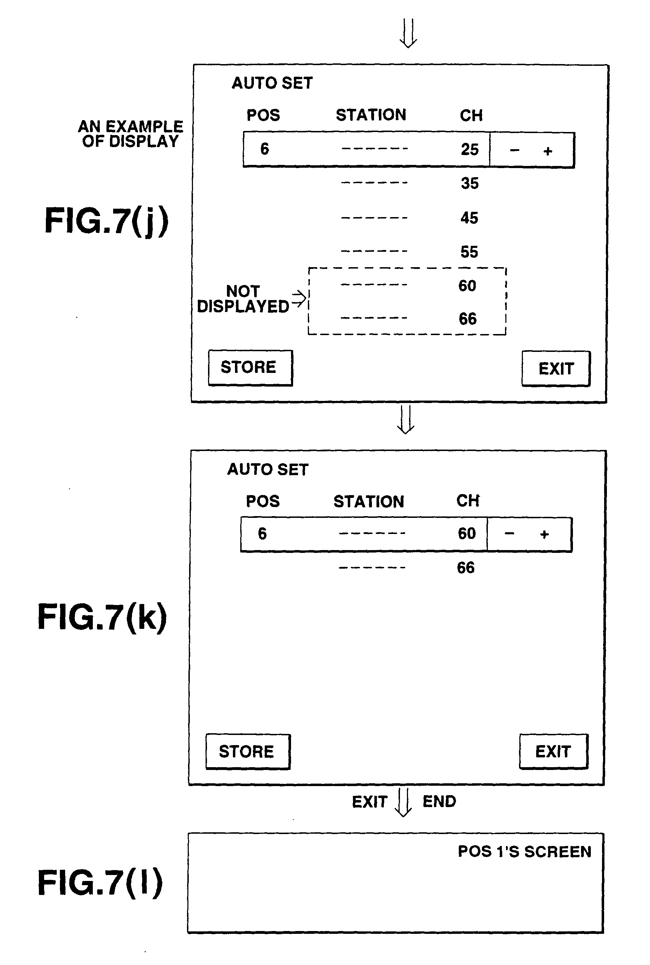

Fig. 7 (1) shows a screen to be displayed after the termination of the preset screen.

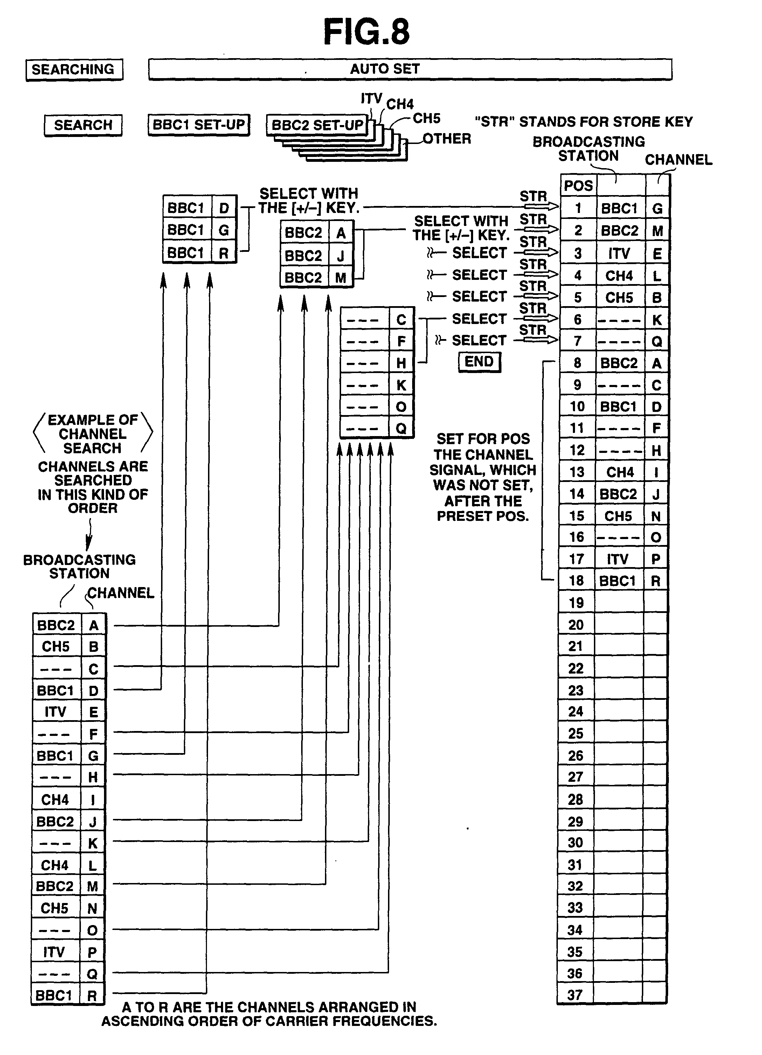

Fig. 8 illustrates operations of AUTO SEARCH and PRESET; and

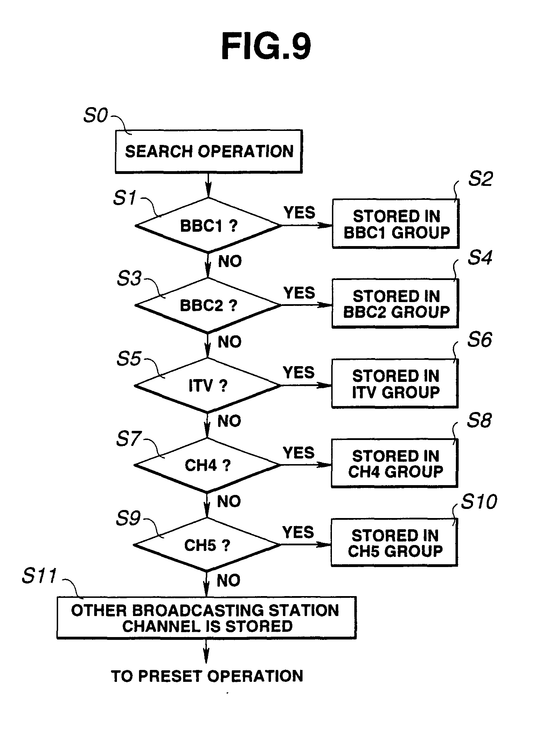

Fig. 9 illustrates the storing operation into the memory.

### Detailed Description of the Preferred Embodiments

The present invention will now be described in detail with reference to the accompanying drawings which illustrate preferred embodiments thereof.

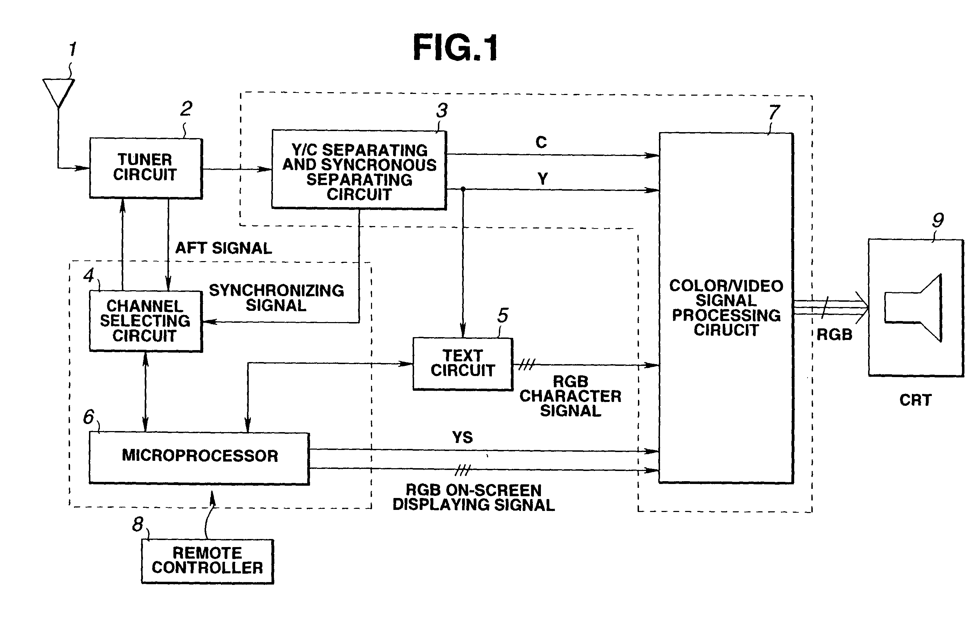

Fig. 1 is a block diagram of an automatic channel preset apparatus for the television broadcasting signals to illustrate a preferred embodiment of the present invention. Herein, the description will be given on the apparatus to receive the television broadcasting signals used in the United Kingdom.

In Fig. 1, the television broadcasting signals are input to an antenna 1. The television broadcasting signals are the modulated composite-color-video signals, RF modulated, for example. The composite-color-video signals are composed of superimposed luminance signals, carrier chrominance signals and synchronizing signals, with the text signals inserted during the vertical blanking periods. The text signals contain station codes of the broadcasting signals, the signals to identify the broadcasting station. A station code contains multiple data, in addition to the name of the broadcasting station (STATION), the channel information such as channel (---) of BBC1, channel (---) of BBC2, and so on. The receiving apparatus separates and extracts the data, generates the character information and displays it on the cathode ray tube (hereinafter referred to as CRT) to be able to make the receiving channel information available.

In this embodiment, the station codes are used not only for the channel information display but also for the AUTO SEARCH operation in the AUTO SET mode. Thus, the channels having different frequencies are classified into groups each of which is for a single program correspondingly to each channel position of the television receiver and is stored into the memory, and later, out of a plurality of channels corresponding to each of the channel positions, a channel in the best reception conditions is preset to the present reception channel by using an operating means (e. g., a remote controller).

The television broadcasting signals from the antenna 1 is received at a tuner circuit 2 which comprises a tuner and an intermediate frequency amplifying circuit.

The video intermediate frequency signals from the tuner circuit 2 are supplied to a Y/C separating and synchronous separating circuit 3, where video detection, Y/C separation and synchronous separation are executed to obtain the carrier chrominance signal C and the luminance signal Y. The Y/C separating and synchronous separating circuit 3 comprises a demodulating means together with a color/video signal processing circuit 7.

On a remote controller 8, the operating means, keys are arranged for power ON/OFF, channel selection, AUTO SET selection, and channel setting up upon preset.

A channel selecting circuit 4 provides, when a channel is selected by the operation of the remote controller 8, predetermined channel data to the tuner circuit 2. An applicable method for the channel selection is the frequency synthesizer system by PLL (phase locked loop). The channel selecting circuit 4 comprises a controlling means together with a microprocessor 6.

The text circuit 5 separates and extracts text signals which are inserted during vertical blanking periods of the video signals in the television broadcasting signals, and generates the character information based on station codes in the text signals, and supplies the information to the color/video signal processing circuit 7.

The microprocessor 6 controls the channel selecting circuit 4 and the text circuit 5, and contains a circuit to generate the on-screen display signals (i.e., character generator) such as channel numbers and/or volume display. Besides, the microprocessor 6, when the remote controller 8 (the operating means) selects the AUTO SET mode, executes AUTO SEARCH, and then, presetting. During AUTO SEARCH, it selects channels sequentially (e.g., starting with lower frequencies) by using the channel selecting data from the channel selecting circuit 4, discriminates the signaling channels by the presence/absence of AFT signals or synchronizing signals, tunes with them, and at the same time, stores STATION (the name of the broadcasting station) at that time, which is identified from the station code in the text signals read by the text circuit 5, and CH (received channel) correspondingly to the channel position. The received channels are classified by the broadcasting signal for a single program into groups and stored into the memory. Upon preset, out of the received and grouped channels, it is designed to set up a channel by operating the keys on the remote controller 8, the operating means, while displaying on the screen one broadcasting signal at a time from each group by selecting channels by the tuner circuit 2.

At the color/video signal processing circuit 7, various signals are input, such as the carrier chrominance signal C and the luminance signal Y from the Y/C separating and synchronous separating circuit 3, the RGB character signals from the text circuit 5, and the RGB on-screen display signals from the microprocessor 6. At the color/video signal processing circuit 7, the carrier chrominance signal C undergoes the color demodulation, and both the demodulated color-difference signals and the luminance signal Y reproduce R, G, and B signals for image display. At the same time, when the reproduced RGB signals and the RGB character signals from the text circuit 5 and/or the RGB on-screen display signals from the microprocessor 6 are switched by the switching signal YS, the signals are superimposed and supplied to the CRT 9, the display means.

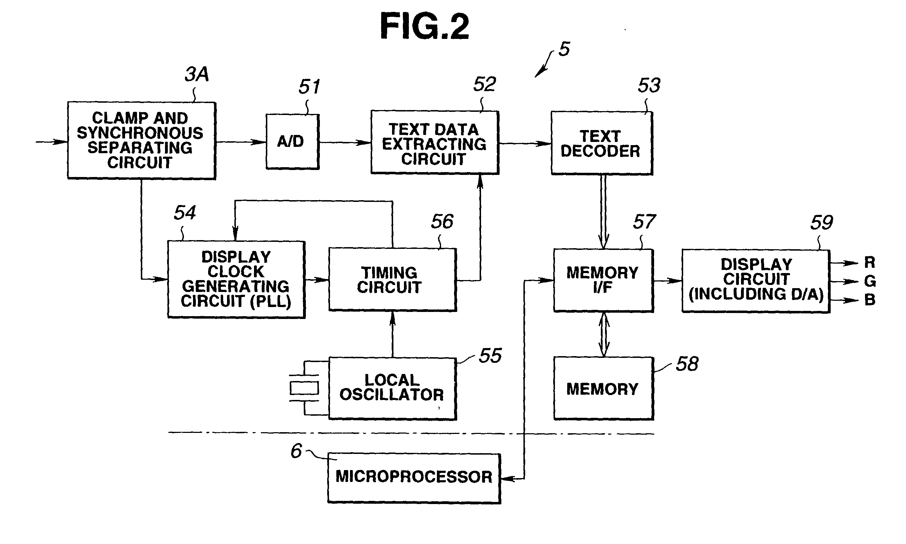

Fig. 2 shows a configuration example of the text circuit 5. From the composite color video signal detected in video phase, the synchronizing signals are separated at the clamp and a synchronous separating circuit 3A (this is provided in a part of the Y/C separating and synchronous separating circuit 3 in Fig. 1). The synchronizing signals are digitized at an A/D converter 51, and then at the text data extracting circuit 52, the text data is separated and extracted. The synchronizing signals separated at the clamp and synchronous separating circuit 3A is supplied to the display clock generating circuit (PLL) 54, and generates display clock by using a local oscillator 55 and a timing circuit 56. The text data, separated and extracted at the text data extracting circuit 52 is decoded by the text decoder 53, and stored into the memory 58 via the memory interface (memory I/F) circuit 57 according to the control of the microprocessor 6. STATION (the name of broadcasting station) and CH (channel) stored in the memory 58 are supplied, in AUTO SET mode or in other cases, according to the control of the microprocessor 6, to the display circuit 59, and they are generated as the R, G, B signals after D/A conversion.

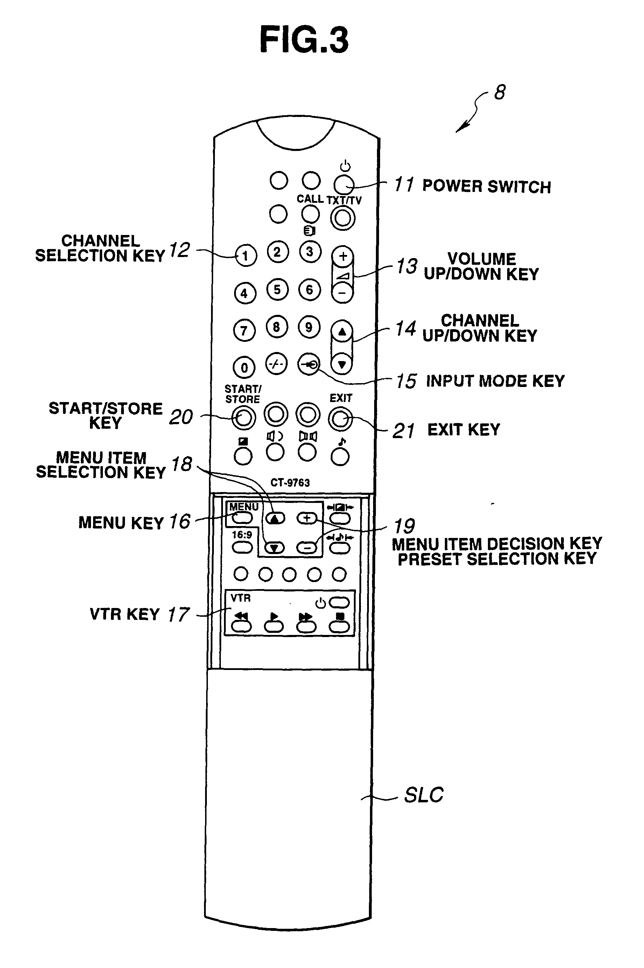

Fig. 3 shows an example of the key arrangement of the remote controller 8. The keys arranged are the power key 11, the channel selection keys 12 comprising ten keys, the volume UP/DOWN keys 13, the channel UP/DOWN keys 14, the input mode key 15, and on the body of the remote controller with the slide cover SLC open, the menu key 16, the VTR keys 17, the menu item selection keys 18, and the menu item decision key (and the preset selection key) 19. Whenever the input mode key 15 is pressed, the TV mode, the external input modes (1), (2) and (3) are selected cyclically. That is, the selection repeats the cycle of TV → the external input mode (1) → the external input mode (2) → the external input mode (3) → TV → and so on.

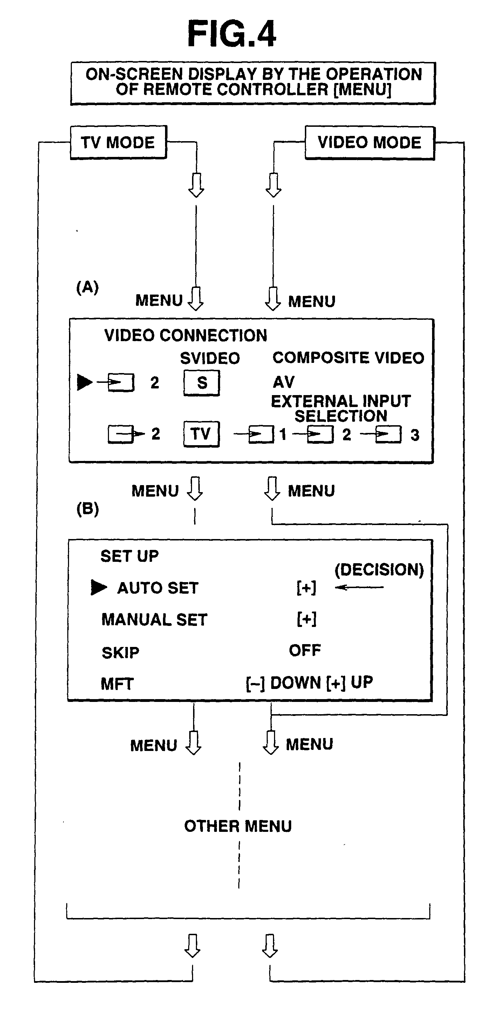

When the menu key 16 is pressed after the TV mode or the external input mode (VIDEO mode) is selected by the input mode key 15, various kinds of menu screens, such as VIDEO CONNECTION screen and SET UP screen are cyclically displayed on the screen, as shown in the marks (A), (B) and (•••) of Fig. 4. For example, when the SET UP screen is displayed, pressing the menu item selection key 18 next to the menu key 16 on the right moves the cursor to AUTO SET, MANUAL SET, or the like, and selection is made by pressing the menu item decision key 19.

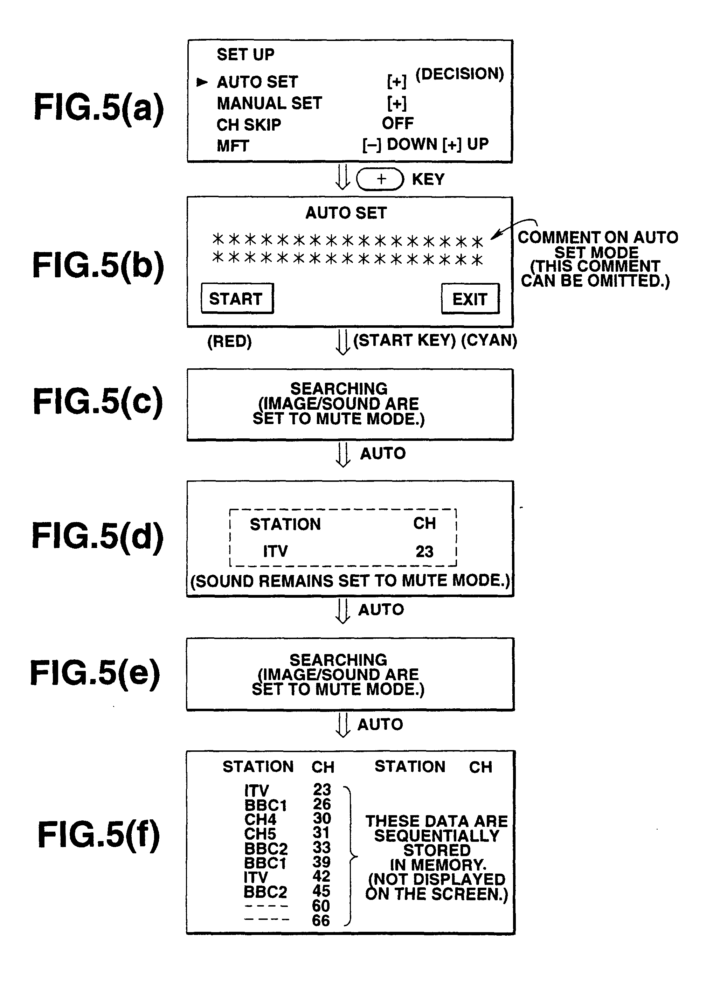

As shown in Fig. 5 (a), when AUTO SET is selected on the SET UP screen, the comment display of the AUTO SET mode appears as seen in Fig. 5 (b), and then, SEARCHING (automatic search) starts as seen in Fig. 5 (c). Channels are selected one by one, and at every selection STATION (the name of broadcasting station) and CH (channel) are displayed on the screen as seen in Fig. 5 (d), and at the same time, as shown in Fig. 5 (f), the text circuit 5 sequentially stores the information on broadcasting stations and channels into the memory 58 in the text circuit 5.

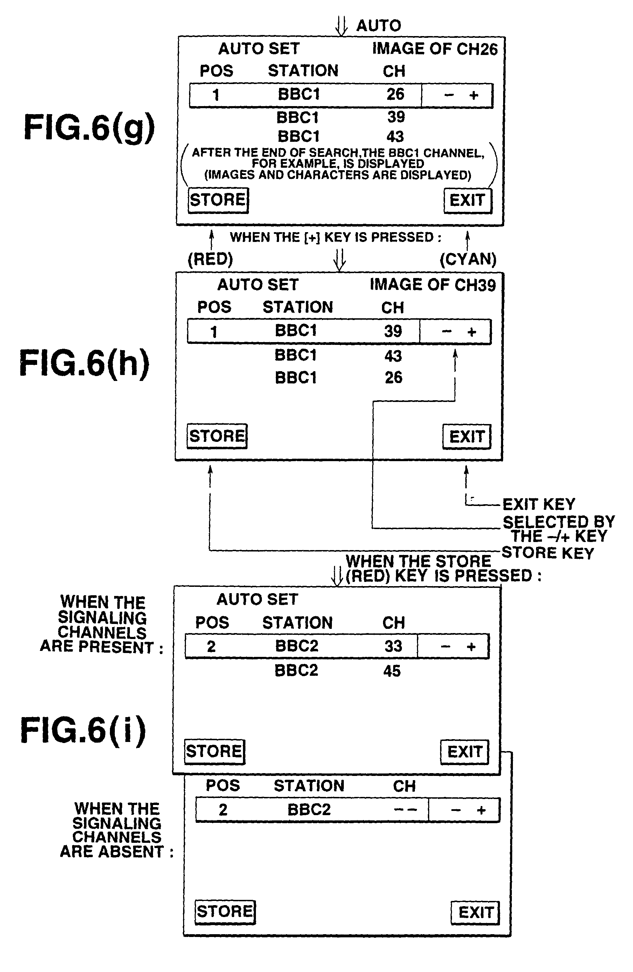

Upon the termination of SEARCHING, the AUTO SET display appears as shown in Fig. 6 (g), and then, the BBC1 preset screen is displayed. That is, the content related to BBC1 is read first from the memory 58 in the text circuit 5, and a plurality of CHs (channels) of BBC1 1 are displayed. At this time, while the channel information of BBC1 is displayed on the screen, an image of the channel number existing in the first line of this preset screen (channel information screen) [in Fig. 6 (g), the image of CH26] is displayed . When the [+] key of the preset selection key 19 is pressed, the display of CH39 moves up to the first line as shown in Fig. 6 (h), and at the same time, the image of CH39 is displayed. If the preset selection key 19 is pressed next, the display of CH43 moves up to the first line and the image of CH43 is displayed. Thus, every time the preset selection key 19 is pressed, the reception conditions of channels can be compared to seek good ones by watching the screen. By the way, the [+] key of the preset selection key 19 enables the forward selection, and the [-] key enables the backward selection.

With a CH (channel) selected in this way on the preset screen of BBC1, if the STORE key 20 is pressed, CH26 is preset for BBC1, for example, to POS1 (the position 1), and the BBC2 preset screen as shown in Fig. 6 (i) is displayed.

In Fig. 6 (i), a plurality of the BBC2 CHs, which correspond to the position 2, are displayed, and similarly to the case in Fig. 6 (g), the presetting gets ready for a channel in good reception conditions.

In the preset screen, if there is no channel to set up (POS2 has no signaling channel to preset in the BBC2 broadcast, for example), [- -] is displayed as shown in Fig. 6 (i).

After this, the preset screens of ITV, CH4, CH5, etc. are displayed correspondingly to the positions POS3, POS4, POS5, etc. When the channel selection key 19 selects a channel in the best reception conditions, presetting becomes possible by pressing the STORE key 20.

On termination of setting up to POS5, the screen is automatically switched to the preset up screen of POS6 as shown in Fig. 7 (g), and out of the remaining channels of the broadcasting stations except BBC1, BBC2, ITV, CH4, CH5, numbers of only four channels are displayed sequentially starting with lower frequencies. At this time, if there are more than five candidate broadcasting stations, it is designed to display them by the scroll display at the time of selection by the preset selection key 19 as shown in Fig. 7 (k).

By the similar operation, the positions POS7, POS8, POS9, etc. are preset as many as desired.

Upon the termination of the preset screen, the receiving channel is automatically switched at POS1 as shown in Fig. 7 (1).

As the result of presetting as described above, the channel G, which is favorably receiving BBC1, is preset to the position 1 as shown in Fig. 8, and to the position 2 the channel M which is well receiving BBC2, and to the position 3 the channel E which is well receiving ITV, etc. are preset respectively.

When the desired setting up is finished in the aforementioned manner and AUTO SET needs termination, the keys are operated as follows:

Pressing the MENU key 16 terminates AUTO SET, sets up the setting content, and the screen returns to the initial display screen. Or, on turning the power switch 11 off, the content set up by that time is set up.

Therefore, after the termination of AUTO SET, for the presetting in Fig. 6 (g), (h), pressing 1 of the ten keys selects CH26 of BBC1.

If exit from the AUTO SET mode is desired, pressing the EXIT key 21 returns the screen to the preceding screen, and pressing the MENU key 16 returns the screen to the initial display screen.

Fig. 9 is a flow chart which shows the memory flow in the AUTO SET mode after the automatic searching.

Once the automatic search starts, the channel selection is executed sequentially, starting with lower frequencies, for example, and the signaling channels are discriminated by using presence/absence of AFT signals or synchronizing signals, and then tuned. During the tuning time of each signaling channel, STATION (the name of the broadcasting station) and CH (the channel number) are decoded and stored by reading the station codes at the text circuit 5. When this operation is executed on all the signaling channels, the search operation terminates.

Next, based on the stored content after termination of this search, the received channels are classified into groups each of which is for the broadcast of a single program, and then stored. First, whether the received channel is BBC1 or not is determined (S1), and then if it is BBC1, the received channel at that time is stored as BBC1 group (S2). This storing operation for BBC1 group is executed on all the received BBC1 channels. Second, whether the received channel is BBC2 or not is determined (S3), and if it is BBC2, the received channel at that time is stored as BBC2 group (S4). This storing operation for BBC2 group is executed on all the received BBC2 channels. Third, whether the received channel is ITV or not is determined (S5), then if it is ITV, the received channel at that time is stored as ITV group (S6). This storing operation for ITV group is executed on all the received ITV channels. Fourth, whether the received channel is CH4 or not is determined (S7), and if it is CH4, the received channel at that time is stored as CH4 group (S8). This storing operation for CH4 group is executed on all the received CH4 channels. Fifth, whether the received channel is CH5 or not is determined (S9), then if it is CH5, the received channel at that time is stored as CH5 group (S10). This storing operation for CH5 group is executed on all the received CH5 channels. BBC1, BBC2, ITV, CH4, and CH5 correspond to the positions from POS1 to POS5. The received channels, which are not classified into the five groups (BBC1, BBC2, ITV, CH4, CH5 groups), are stored at the positions from POS6 on in order of low frequencies (S 11).

As described above, the procedure is to press the MENU key on the remote controller several times in order to get the SET UP screen, to select AUTO SET on this screen, to press START for execution, and to execute the SEARCH operation. In the SEARCH operation, the channel selecting circuit 4, controlled by the microprocessor 6, changes the local oscillating frequency of the tuner circuit 2 in succession, so that the channels can be received. When a signaling channel is received, STATION (the name of broadcasting station) and CH (received channel), which are read from station codes inserted in the vertical blanking period of the received signal, are stored into the memory in the text circuit 5. When all the searches are finished, the setting up screen of POS1 (BBC1) appears first. In the memory in the text circuit 5, a plurality of signaling channel of BBC1 are stored as POS1 (position 1), a plurality of signaling channels of BBC2 are stored as POS2, a plurality of signaling channels of ITV are stored as POS3, a plurality of signaling channels of CH4 are stored as POS4, and a plurality of signaling channels of CH5 are stored as POS5. On the setting up screen of POS1 displayed after the termination of the automatic search, a plurality of signaling channel numbers of BBC1 are displayed. When one channel number is selected out of the received channels which are displayed on the setting up screen, the image of the channel is displayed. When another BBC1 channel is selected, the image of the channel is displayed. Thus, when one channel in the best reception conditions is selected out of the receivable BBC1 channels, and the STORE key is pressed, the channel in the best reception conditions is preset as BBC1 channel. Similarly, as BBC2 channel of POS2, a channel in the best reception conditions can be preset.

In such a manner, upon the execution of AUTO SET, the search operation detects the signaling channels first, and then, the received channels are stored corresponding to each broadcasting station (i. e. to each position), and the channel in the best reception conditions for each broadcasting station can be selected while watching it on the screen. As the signaling channel to be set up to each position, users advantageously can preset the channel in the best reception conditions while watching its actual image displayed on the screen.

That is, when broadcast of a single program are received from a plurality of channels, it becomes possible to select the channel in the best reception conditions in respect of the field intensity or ghost.

In the preferred embodiment mentioned so far, the description exemplifies the broadcasting signals used in the United Kingdom. However, the present invention is applicable not only in Japan but also in other countries or regions, if station codes are inserted into the television broadcasting signals and transmitted, as are in the United Kingdom. It is naturally understood that the present invention is not limited to the embodiments described above, and various modifications can be made for practice within the scope of the appended claim.

## Claims

1. An automatic channel preset apparatus for broadcast television signals, comprising:
a tuner circuit (2) for receiving broadcast television signals;
demodulation means (3,7) for demodulating the signals received by said tuner circuit into video signals;
a text circuit (5) for extracting station codes out of the video signals demodulated by said demodulation means (3,7) and reading information on broadcasting stations and channels;
display means (9) for displaying the video signals from said demodulation means (3,7) and/or information on broadcasting stations and channels from said text circuit (5);
operating means (8) responsive to user input for selecting an AUTO SET mode; and
control means (4,6), wherein when the AUTO SET mode is selected by said operating means (8), the control means:
controls the tuner circuit to receive broadcast signals on a plurality of channels; and
identifies the station of each signal using said extracted station codes, **characterised in that** in said AUTO SET mode
the control means also classifies the signals into a signal group for each station; and
stores the station and channel information for each signal in a memory, wherein the control means also carries out a preset operation for each station comprising:
controlling the display means to display to the user a signal from the signal group of the station;
changing the signal displayed by the display means to another signal from the same signal group, in response to a channel selection operation of the user on the operating means and
setting up a channel as a preset for the station in response to a user input on said operating means.

## Patentansprüche

1. Vorrichtung zur automatischen Voreinstellung der Kanäle für gesendete Fernsehsignale, mit:
einer Tunerschaltung (2) zum Empfangen von gesendeten Fernsehsignalen;
einer Demodulationseinrichtung (3, 7) zum Demodulieren der Signale, die von der Tunerschaltung empfangen werden, zu Videosignalen;
einer Textschaltung (5) zum Extrahieren von Stationscodes aus den Videosignalen, die von der Demodulationseinrichtung (3, 7) demoduliert werden, und zum Lesen von Information über Sendestationen und Kanäle;
einer Anzeigeeinrichtung (9) zum Anzeigen der Videosignale von der Demodulationseinrichtung (3, 7) und/oder von Information über Sendestationen und Kanäle von der Textschaltung (5);
einer Bedienungseinrichtung (8), die auf Anwendereingabe anspricht, zum Wählen eines AUTO SET-Modus; und
einer Steuereinrichtung (4, 6), wobei, wenn der AUTO SET-Modus durch die Bedienungseinheit (8) gewählt ist, die Steuereinrichtung bewirkt,
daß die Tunerschaltung gesendete Signale auf einer Vielzahl von Kanälen empfängt; und
die Station jedes Signals unter Verwendung der extrahierten Stationscodes identifiziert,
**dadurch gekennzeichnet, daß** in dem AUTO SET-Modus
die Steuereinrichtung auch die Signale in eine Signalgruppe für jede Station klassifiziert, und
die Stations- und Kanalinformation für jedes Signal in einem Speicher speichert, wobei die Steuereinrichtung auch einen vorher eingestellten Vorgang für jede Station durchführt, mit den folgenden Schritten:
Steuern der Auzeigeeinrichtung, um dem Anwender ein Signal aus der Signalgruppe der Station anzuzeigen;
Ändern des Signals, das von der Anzeigeeinrichtung angezeigt wird, in ein anderes Signal aus der gleichen Signalgruppe als Antwort auf einen Kanalwählvorgang des Anwenders an der Bedienungseinrichtung und
Einrichten eines Kanals als Voreinstellung für die Station als Antwort auf eine Anwendereingabe an der Bedienungseinrichtung.

## Revendications

1. Appareil de pré-établissement de canal automatique pour des signaux de télévision de diffusion, comprenant:
un circuit de tuner (2) pour recevoir des signaux de télévision de diffusion;
un moyen de démodulation (3, 7) pour démoduler les signaux qui sont reçus par ledit circuit de tuner selon des signaux vidéo;
un circuit de texte (5) pour extraire des codes de station à partir des signaux vidéo démodulés par ledit moyen de démodulation (3, 7) et pour lire une information concerant des stations de diffusion et des canaux;
un moyen d'affichage (9) pour afficher les signaux vidéo provenant dudit moyen de démodulation (3, 7) et/ou une information concernant des stations de diffusion et des canaux provenant dudit circuit de texte (5);
un moyen d'opération (8) sensible à une entrée utilisateur pour sélectionner un mode établissement automatique; et
un moyen de commande (4, 6), dans lequel, lorsque le mode établissement automatique est sélectionné dans ledit moyen d'opération (8), le moyen de commande:
commande le circuit de tuner pour recevoir les signaux de diffusion sur une pluralité de canaux; et
identifie la station de chaque signal en utilisant lesdits codes de station extraits,
**caractérisé en ce que**, dans ledit mode établissement automatique, le moyen de commande:
classifie également les signaux selon un groupe de signaux pour chaque station; et
stocke l'information de station et de canal pour chaque signal dans une mémoire, dans lequel le moyen de commande met également en oeuvre une opération de pré-établissement pour chaque station comprenant
la commande du moyen d'affichage pour afficher pour l'utilisateur un signal pris parmi le groupe de signaux de la station; et
la modification du signal affiché par le moyen d'affichage selon un autre signal pris parmi le même groups de signaux, en réponse à une opération de sélection de canal de l'utilisateur sur le moyen d'opération; et
l'établissement d'un canal en tant que canal pré-établi pour la station en réponse à une entrée utilisateur sur ledit moyen d'opération.
